# EUROPÄISCHE PATENTANMELDUNG

(11) **EP 1 645 775 A2**
(43) Veröffentlichungstag der Anmeldung: **12.04.2006**
(21) Anmeldenummer: 05021122.6
(22) Anmeldetag: 28.09.2005
(51) Int. Cl.: F16F 15/123, F16D 13/64

(54) **Torsionsschwingungsdämpfer, insbesondere für eine Kupplungsscheibe**

(30) Priorität: 09.10.2004 DE 102004049238
(71) Anmelder: ZF FRIEDRICHSHAFEN AG, 88046 Friedrichshafen (DE)
(72) Erfinder: Jeppe, Harald, 97422 Schweinfurt (DE)

(57) **Zusammenfassung**

Ein Torsionsschwingungsdämpfer (38), insbesondere für eine Kupplungsscheibe, umfasst ein - bezogen auf eine Drehachse - radial äußeres Scheibenelement (12), ein radial inneres Scheibenelement (14), wenigstens ein Federhalterungselement (42) für wenigstens eine Dämpferfeder (40), wobei das Federhalterungselement (42) mit einem Scheibenelement (12) von äußerem Scheibenelement (12) und innerem Scheibenelement (14) zur gemeinsamen Drehbewegung fest verbunden ist und erste Umfangsabstützbereiche (54) für die wenigstens eine Dämpferfeder (40) bereitstellt, und wobei an dem anderen Scheibenelement (14) von innerem Scheibenelement (14) und äußerem Scheibenelement (12) zweite Umfangsabstützbereiche (64) für die wenigstens eine Dämpferfeder (40) vorgesehen sind, wobei das Federhalterungselement (42) für die wenigstens eine Dämpferfeder (40) einen in Umfangsrichtung durch die ersten Umfangsabstützbereiche (54) begrenzten Federkanal (50) aufweist. An dem wenigstens einen Federhalterungselement (42) ist ein erster Axialsicherungsbereich (56) vorgesehen, durch welchen die wenigstens eine Dämpferfeder (40) gegen Herausbewegung aus dem Federkanal (50) in einer ersten axialen Richtung gesichert ist.

## Beschreibung

Die vorliegende Erfindung betrifft einen Torsionsschwingungsdämpfer, insbesondere für eine Kupplungsscheibe, umfassend:
- ein - bezogen auf eine Drehachse - radial äußeres Scheibenelement,
- ein radial inneres Scheibenelement,
- wenigstens ein Federhalterungselement für wenigstens eine Dämpferfeder, wobei das Federhalterungselement mit einem Scheibenelement von äußerem Scheibenelement und innerem Scheibenelement zur gemeinsamen Drehbewegung fest verbunden ist und erste Umfangsabstützbereiche für die wenigstens eine Dämpferfeder bereitstellt, und wobei an dem anderen Scheibenelement von innerem Scheibenelement und äußerem Scheibenelement zweite Umfangsabstützbereiche für die wenigstens eine Dämpferfeder vorgesehen sind,
wobei das Federhalterungselement für die wenigstens eine Dämpferfeder einen in Umfangsrichtung durch die ersten Umfangsabstützbereiche begrenzten Federkanal aufweist.

Ein derartiger Torsionsschwingungsdämpfer ist aus der DE 199 01 043 A1 bekannt. Dieser Torsionsschwingungsdämpfer umfasst zwei Scheibenelemente. Ein radial inneres Scheibenelement - radial bezogen auf die Drehachse einer eine derartige Kupplungsscheibe enthaltenden Reibungskupplung - ist mit einer Nabe zur Ankopplung an eine Getriebeeingangswelle fest verbunden. Das radial äußere Scheibenelement trägt die Reibbeläge der Kupplungsscheibe. Das radial innere und das radial äußere Scheibenelement weisen jeweils Verzahnungen auf, die derart miteinander in Kämmeingriff stehen, dass die beiden Scheibenelemente sich in einem begrenzten Drehwinkelbereich in Umfangsrichtung um die Drehachse bezüglich einander bewegen können. In den Bereich dieser Verzahnungen sind die einer Umfangsdrehbewegung der beiden Scheibenelemente bezüglich einander entgegenwirkenden Dämpferfedern integriert. Diese Dämpferfedern stützen sich in Umfangsrichtung jeweils an zwei unmittelbar aufeinander folgenden Zähnen der Verzahnung des äußeren Scheibenelements ab bzw. sind dort unter Vorspannung gehalten. Zur Abstützung an dem inneren Scheibenelement bzw. den Zähnen der Verzahnung desselben ist ein Federhalterungselement vorgesehen. Dieses ist einerseits an zwei in Umfangsrichtung unmittelbar aufeinander folgenden Zähnen der Verzahnung des inneren Scheibenelements fest abgestützt und weist andererseits für die Dämpferfedern Umfangsabstützbereiche auf, zwischen welchen die Dämpferfedern, ebenso wie zwischen den Zähnen der Verzahnung des äußeren Scheibenelements, unter Vorspannung gehalten sind. Zwischen den Umfangsabstützbereichen des Federhalterungselements ist also ein Federkanal jeweils für eine Dämpferfeder gebildet, der in Umfangsrichtung begrenzt ist, in axialer Richtung aber offen ist.

Es ist eine erste Aufgabe der vorliegenden Erfindung, einen gattungsgemäßen Torsionsschwingungsdämpfer derart weiterzubilden, dass eine erhöhte Sicherheit bei der Lagevorgabe für die Dämpferfedern realisiert ist.

Erfindungsgemäß wird diese Aufgabe gelöst durch einen Torsionsschwingungsdämpfer, insbesondere für eine Kupplungsscheibe, umfassend:
- ein - bezogen auf eine Drehachse - radial äußeres Scheibenelement,
- ein radial inneres Scheibenelement,
- wenigstens ein Federhalterungselement für wenigstens eine Dämpferfeder, wobei das Federhalterungselement mit einem Scheibenelement von äußerem Scheibenelement und innerem Scheibenelement zur gemeinsamen Drehbewegung fest verbunden ist und erste Umfangsabstützbereiche für die wenigstens eine Dämpferfeder bereitstellt, und wobei an dem anderen Scheibenelement von innerem Scheibenelement und äußerem Scheibenelement zweite Umfangsabstützbereiche für die wenigstens eine Dämpferfeder vorgesehen sind,
wobei das Federhalterungselement für die wenigstens eine Dämpferfeder einen in Umfangsrichtung durch die ersten Umfangsabstützbereiche begrenzten Federkanal aufweist.

Dabei ist weiter vorgesehen, dass an dem wenigstens einen Federhalterungselement ein erster Axialsicherungsbereich vorgesehen ist, durch welchen die wenigstens eine Dämpferfeder gegen Herausbewegung aus dem Federkanal in einer ersten axialen Richtung gesichert ist.

Dadurch, dass an dem wenigstens einen Federhalterungselement ein die zugeordnete Dämpferfeder wenigstens in einer Richtung axial sichernder Axialsicherungsbereich vorgesehen ist, kann sichergestellt werden, dass auch bei Auftreten von Taumelbewegungen oder Axialversatzbewegungen ein allmähliches Herauswandern der Dämpferfedern aus den sie aufnehmenden Federkanälen nicht auftritt.

Um in beiden axialen Richtungen dafür zu sorgen, dass eine ungewollte Herausbewegung der Dämpferfedern nicht auftritt, wird weiter vorgeschlagen, dass ein zweiter Axialsicherungsbereich vorgesehen ist, durch welchen die wenigstens eine Dämpferfeder gegen Herausbewegung aus dem Federkanal in einer zweiten axialen Richtung, die der ersten axialen Richtung entgegengesetzt ist, gesichert ist.

Bei einer nur eine geringe Anzahl an Bauteilen erfordernden vorteilhaften Ausgestaltungsform kann dabei weiter vorgesehen sein, dass der zweite Axialsicherungsbereich wenigstens zum Teil an dem einen Scheibenelement vorgesehen ist. Wenn dabei weiterhin an dem einen Scheibenelement ein zwischen die der wenigstens einen Dämpferfeder zugeordneten ersten Umfangsabstützbereiche eingreifender Axialsicherungsabschnitt vorgesehen ist, kann neben der Funktion der Axialsicherung für die wenigstens eine Dämpferfeder zusätzlich auch eine Drehkopplungsfunktion zwischen dem einen Scheibenelement und dem wenigstens einen Federhalterungselement erlangt werden.

Bei einer alternativen Ausgestaltungsform, die selbstverständlich auch mit der vorangehend beschriebenen Ausgestaltungsform zur axialen Sicherung kombiniert werden kann, kann vorgesehen sein, dass der zweite Axialsicherungsbereich wenigstens zum Teil an dem wenigstens einen Federhalterungselement vorgesehen ist.

Das wenigstens eine Federhalterungselement kann aus Kunststoff aufgebaut und somit sehr kostengünstig herzustellen sein.

Um eine Überlastung der Dämpferfedern im Drehmomentübertragungszustand durch zu starke Kompression vermeiden zu können, wird weiter vorgeschlagen, dass im Wesentlichen radial außerhalb des wenigstens einen Federhalterungselements eine Drehwinkelbegrenzungsanordnung vorgesehen ist. Die Anordnung dieser Drehwinkelbegrenzungsanordnung im Wesentlichen radial außerhalb des wenigstens einen Federhalterungselements sorgt weiterhin dafür, dass die im Bereich der aneinander anliegenden und somit Drehmomente übertragenden Verzahnungen auftretende Flächenpressung im Vergleich zu einer Ausgestaltungsform mit weiter radial innen liegenden Verzahnungen vermindert ist und somit auch bei über anliegende Verzahnungen übertragenen Drehmomenten Radialrelativbewegungen zwischen den beiden Scheibenelementen zum Kompensieren von Achsversatz grundsätzlich leichter möglich sind.

Wie bereits voranstehend ausgeführt, kann die Drehwinkelbegrenzung derart aufgebaut sein, dass an dem radial äußeren Scheibenelement und dem radial inneren Scheibenelement jeweils mit Drehbewegungsspiel in Eingriff stehende Verzahnungsformationen vorgesehen sind.

Um zur korrekten Wechselwirkung mit den Dämpferfedern die Axialrelativlage der beiden Scheibenelemente bezüglich einander definiert vorgeben zu können, wird weiter vorgeschlagen, dass das radial äußere Scheibenelement und das radial innere Scheibenelement sich in Umfangsrichtung und in radialer Richtung wenigstens bereichsweise überlappen und dass eine die beiden Scheibenelemente gegeneinander vorspannende Vorspannanordnung vorgesehen ist. Dies kann beispielsweise dadurch realisiert werden, dass die Vorspannanordnung ein bezüglich des einen Scheibenelements sich abstützendes und das andere Scheibenelement gegen dieses vorspannendes Vorspannfederelement umfasst. Um dabei einen direkten Reibkontakt zwischen den Scheibenelementen vermeiden zu können, und gleichzeitig ein definiertes Gleit- bzw. Reibverhalten vorgeben zu können, wird weiter vorgeschlagen, dass die Scheibenelemente unter Zwischenlegung des wenigstens einen Federhalterungselements gegeneinander vorgespannt sind.

Bei dem Einsatz von Torsionsschwingungsdämpfern beispielsweise in Kupplungsscheiben bei Reibungskupplungen in Kraftfahrzeugen besteht grundsätzlich das Problem, dass im eingerückten Zustand einer derartigen Reibungskupplung an sich eine starre Kopplung zwischen einer antreibenden Welle, im Allgemeinen einer Kurbelwelle und einer Abtriebswelle, im Allgemeinen einer Getriebeeingangswelle, vorhanden ist. Weisen diese Wellen zueinander versetzt oder geneigt liegende Drehachsen auf, so kann es auf Grund der vergleichsweise starren Kopplung zu Zwängungen oder Verformungen kommen, die zu einer übermäßigen Belastung und ggf. einer Beschädigung verschiedener Kupplungskomponenten führen können.

Es ist daher eine zweite Aufgabe der vorliegenden Erfindung, einen gattungsgemäßen Torsionsschwingungsdämpfer derart weiterzubilden, das auch bei vorhandenem Achsversatz oder vorhandener Achsneigung eine dadurch induzierte Überlastung vermieden werden kann.

Erfindungsgemäß wird diese Aufgabe gelöst durch einen Torsionsschwingungsdämpfer, insbesondere für eine Kupplungsscheibe, umfassend:
- ein - bezogen auf eine Drehachse - radial äußeres Scheibenelement,
- ein radial inneres Scheibenelement,
- wenigstens ein Federhalterungselement für wenigstens eine Dämpferfeder, wobei das Federhalterungselement mit einem Scheibenelement von äußerem Scheibenelement und innerem Scheibenelement zur gemeinsamen Drehbewegung fest verbunden ist und erste Umfangsabstützbereiche für die wenigstens eine Dämpferfeder bereitstellt, und wobei an dem anderen Scheibenelement von innerem Scheibenelement und äußerem Scheibenelement zweite Umfangsabstützbereiche für die wenigstens eine Dämpferfeder vorgesehen sind,
wobei das Federhalterungselement für die wenigstens eine Dämpferfeder einen in Umfangsrichtung durch die ersten Umfangsabstützbereiche begrenzten Federkanal aufweist.

Dabei ist weiter vorgesehen, dass im Wesentlichen radial außerhalb des wenigstens einen Federhalterungselements eine Drehwinkelbegrenzungsanordnung vorgesehen ist.

Durch das Verlagern der Drehwinkelbegrenzungsanordnung in einen Bereich radial außerhalb des Federhalterungselements, also allgemein einen vergleichsweise weit radial außen liegenden Bereich des Torsionsschwingungsdämpfers, wird erreicht, dass die gegeneinander anliegenden und der Drehwinkelbegrenzung dienenden Elemente bei vorgegebenem zu übertragenden Drehmoment mit geringerer Flächenpressung aneinander anliegen. Dies entlastet diese aneinander anliegenden Abschnitte bzw. Oberflächen und erleichtert eine beispielsweise durch Achsversatz induzierte oder erforderliche Radialrelativbewegung der aneinander anliegenden Oberflächen im Rotationsbetrieb.

Es sei hier darauf hingewiesen, dass selbstverständlich ein derartiger Torsionsschwingungsdämpfer alle vorangehend bereits diskutierten konstruktiven Maßnahmen entweder in Kombination oder einzeln aufweisen kann.

Die vorliegende Erfindung betrifft ferner eine Kupplungsscheibe mit einem erfindungsgemäßen Torsionsschwingungsdämpfer. Dabei kann dann vorgesehen sein, dass das innere Scheibenelement eine Nabenanordnung zur drehfesten Ankopplung an eine Welle aufweist und das äußere Scheibenelement Reibbeläge trägt.

Die vorliegende Erfindung wird nachfolgend mit Bezug auf die beiliegenden Zeichnungen detailliert beschrieben. Es zeigt:
- Fig. 1: eine Axialansicht einer Kupplungsscheibe;
- Fig. 2: eine Längsschnittansicht der in Fig. 1 gezeigten Kupplungsscheibe, geschnitten entlang einer Linie II-II in Fig. 1;
- Fig. 3: eine perspektivische Explosionsansicht der in Fig. 1 dargestellten Kupplungsscheibe;

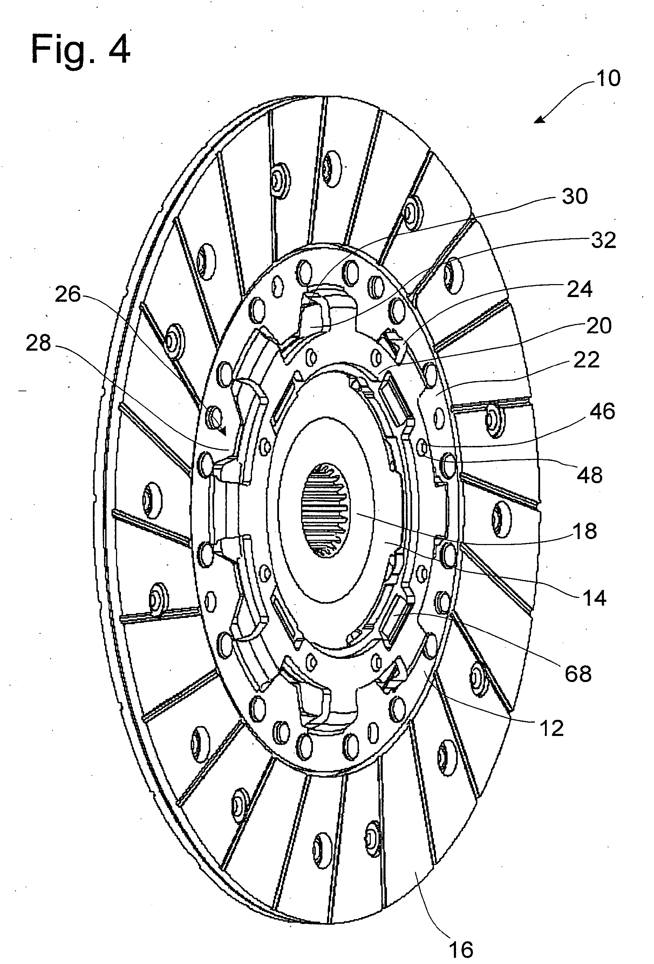

- Fig. 4: eine perspektivische Ansicht der in Fig. 1 dargestellten Kupplungsscheibe, betrachtet in Blickrichtung IV in Fig. 2;
- Fig. 5: eine weitere perspektivische Ansicht der in Fig. 1 dargestellten Kupplungsscheibe, betrachtet in Blickrichtung V in Fig. 2;
- Fig. 6: eine vergrößerte Detailansicht eines eine Dämpferfeder enthaltenden Bereichs der in Fig. 2 gezeigten Kupplungsscheibe;
- Fig. 7: eine Schnittansicht eines bei der Kupplungsscheibe gemäß Fig. 1 eingesetzten Federhalterungselements;
- Fig. 8: das in Fig. 7 gezeigte Federhalterungselement mit in einen Federkanal eingesetzter Dämpferfeder;
- Fig. 9: das zwischen zwei Scheibenelementen eingespannte und eine Dämpferfeder in einem Federkanal enthaltende Federhalterungselement.

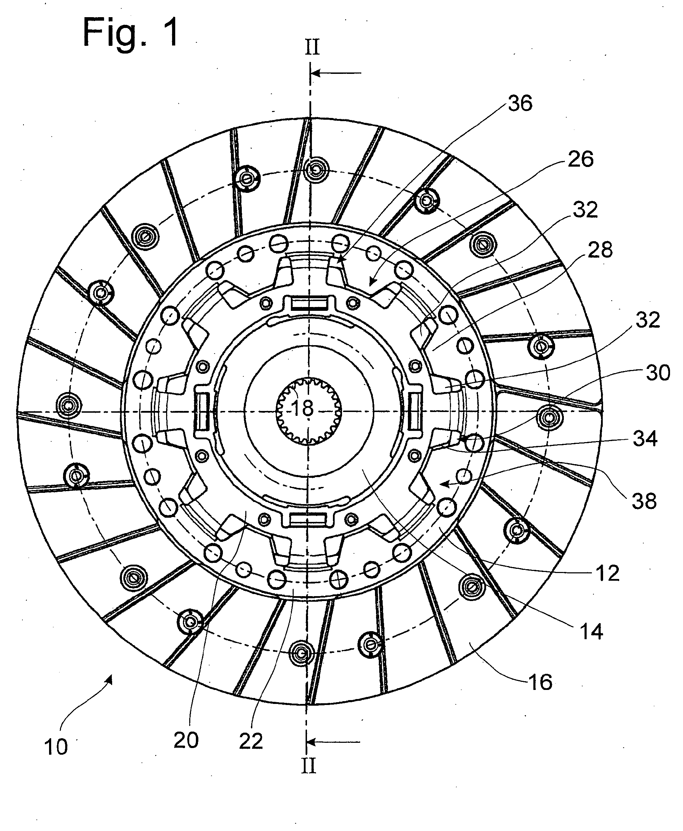

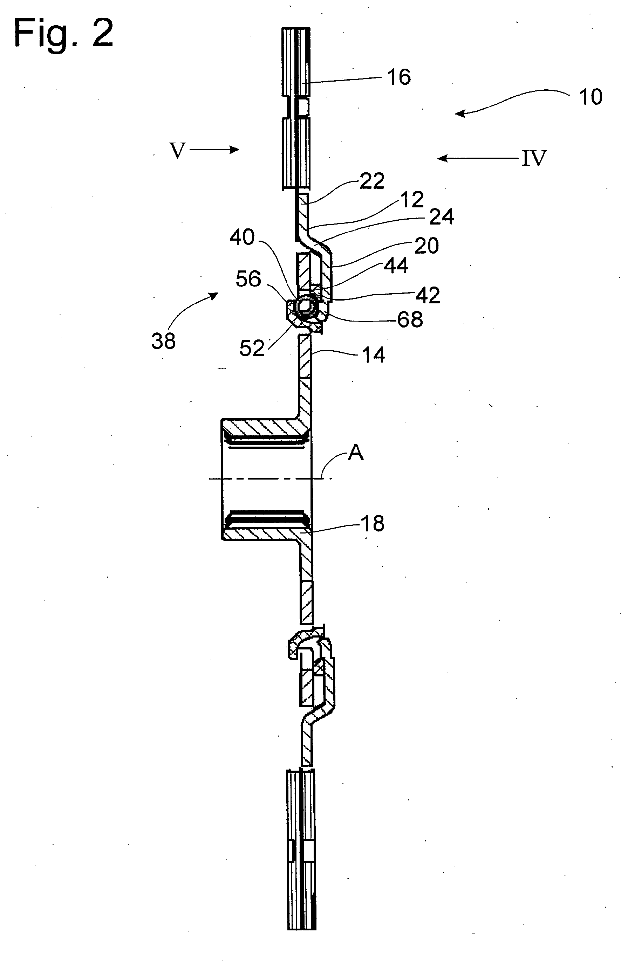

In den Fig. 1 und 2 ist eine Kupplungsscheibe allgemein mit 10 bezeichnet. Diese Kupplungsscheibe 10 umfasst zwei Scheibenelemente 12 und 14. Davon kann das Scheibenelement 12 als äußeres Scheibenelement bezeichnet werden, außen hier bezogen auf eine Drehachse A der Kupplungsscheibe 10 im Rotationsbetrieb, während das Scheibenelement 14 als inneres oder radial inneres Scheibenelement bezeichnet werden kann. Die beiden Scheibenelemente 12, 14 liegen grundsätzlich bzw. mit ihren wesentlichen Abschnitten in der gleichen axialen Ebene. Das äußere Scheibenelement 12 trägt die Reibbeläge 16 der Kupplungsscheibe 10, wobei die Anbindung hier in an sich bekannter Art und Weise über Belagsfedern o. dgl. erfolgen kann. Das innere Scheibenelement 14 ist mit einer Nabe 18 fest verbunden, beispielsweise durch Verschweißung. Diese Nabe 18 kann mit einer Innenverzahnung drehfest an eine Abtriebswelle, beispielsweise eine Getriebeeingangswelle, angekoppelt werden.

Das äußere Scheibenelement 12 weist zwei axial zueinander versetzt liegende ringartige Abschnitte 20, 22 auf. An dem radial äußeren ringartigen Abschnitt 22 sind, wie in der Fig. 2 erkennbar, die Reibbeläge 16 getragen. Zwischen dem äußeren Ringabschnitt 22 und dem inneren Ringabschnitt 20 erstrecken sich in mehreren Umfangspositionen den angesprochenen Achsversatz realisierende Verbindungsstege 24. Somit ergibt sich die in Fig. 2 erkennbare Konfiguration, bei welcher der innere Ringabschnitt 20 axial neben dem radial äußeren Bereich des inneren Scheibenelements 14 liegt und sich somit mit diesem radial und selbstverständlich auch in Umfangsrichtung überlappt.

Der äußere Ringabschnitt 22 trägt eine allgemein mit 26 bezeichnete erste Verzahnungsformation, welche eine Mehrzahl von sich im Wesentlichen nach radial innen erstreckenden Zähnen 28 aufweist. Das radial innere Scheibenelement 14 trägt in seinem radial äußeren Bereich eine zweite Verzahnungsformation 30 mit einer Mehrzahl von sich im Wesentlichen nach radial außen erstreckenden Zähnen 32. Da der äußere Ringabschnitt 22 und das innere Scheibenelement 14 in der gleichen axialen Ebene liegen, ergibt sich somit eine in der Fig. 1 erkennbare Konfiguration, bei welcher jeweils ein Zahn 28 der ersten Verzahnungsformation 26 zwischen zwei Zähne 32 der zweiten Verzahnungsformation 30 eingreift. Dabei besteht jedoch ein geringes Bewegungsspiel 34, so dass sich die beiden Scheibenelemente 12, 14, bedingt durch dieses Bewegungsspiel 34, in einem entsprechenden Winkelbereich in Umfangsrichtung bezüglich einander verdrehen können. Die Zähne 28 bzw. 32 weisen jeweils in Achsrichtung und näherungsweise in radialer Richtung sich erstreckende Anlageflächen auf, mit welchen sie in gegenseitigen Anlagekontakt treten können. Die beiden Verzahnungsformationen 26, 30 bilden somit eine allgemein mit 36 bezeichnete Drehwinkelbegrenzungsanordnung.

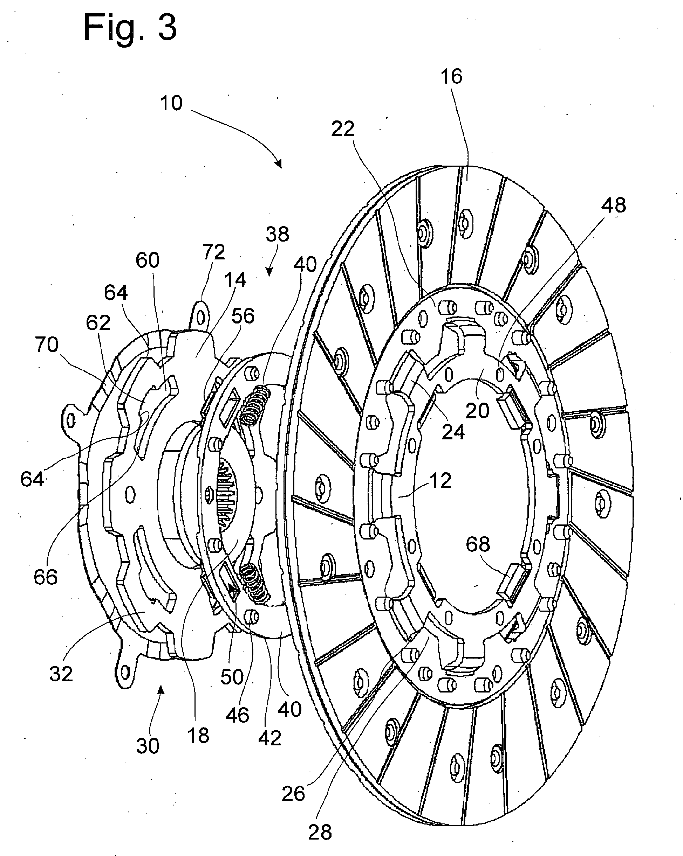

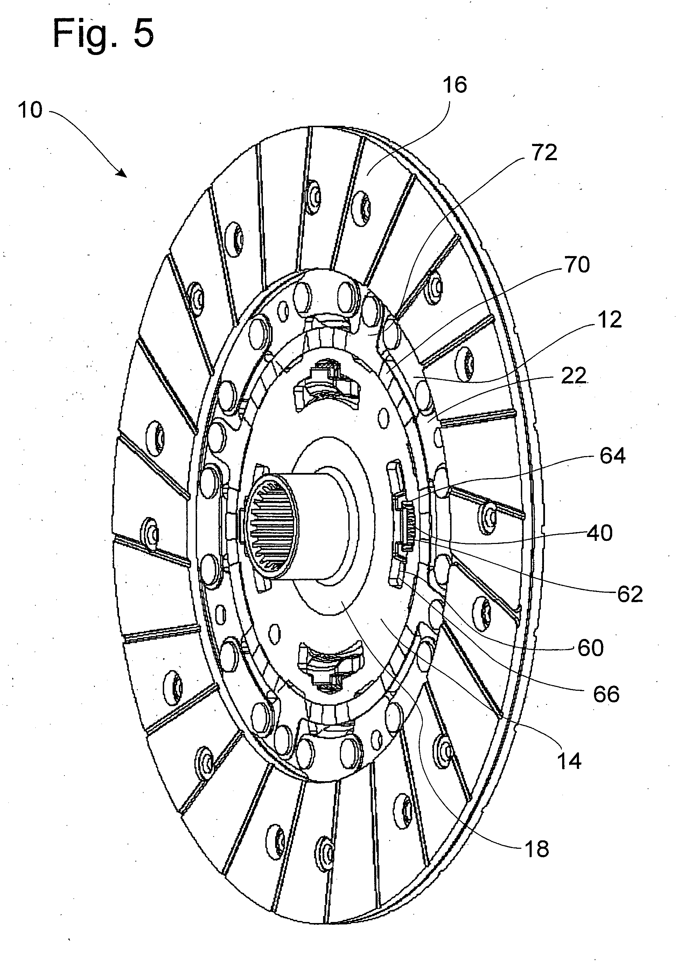

Ein die beiden Scheibenelemente 12, 14 umfassender Torsionsschwingungsdämpfer 38 der Kupplungsscheibe 10 weist ferner im dargestellten Beispiel vier mit einem gleichmäßigen Winkelabstand von 90° zueinander angeordnete Dämpferfedern 40 auf (siehe Fig. 3, 5). Diese Dämpferfedern 40 wirken, wie im Folgenden noch beschrieben, mit den beiden Scheibenelementen 12, 14 zusammen, um grundsätzlich einer Relativdrehbewegung der beiden Scheibenelemente 12, 14 mit dem angegebenen Bewegungsspiel 34 entgegenzuwirken, bei Einleitung entsprechender Drehmomente aber diese Relativdrehbewegung zuzulassen.

Ein in Fig. 3 erkennbares Federhalterungselement 42 für die Dämpferfedern 40 weist einen im Allgemeinen ringartigen Körper 44 auf. An diesem ringartigen Körper 44 sind an mehreren Umfangspositionen Drehkopplungsvorsprünge 46 vorgesehen, die im zusammengefügten Zustand in zugeordnete Öffnungen 48 am inneren Ringabschnitt 20 des äußeren Scheibenelements 12 eingreifend positioniert sind und somit eine drehfeste Kopplung zwischen dem äußeren Scheibenelement 12 und dem Federhalterungselement 42 erzeugen. Dabei liegt dann der ringartige Körper 44 axial am inneren Ringabschnitt 20 an, während er an seiner anderen axialen Seite am inneren Scheibenelement 14 anliegt, mit diesem aber grundsätzlich nicht in Drehkopplungseingriff steht.

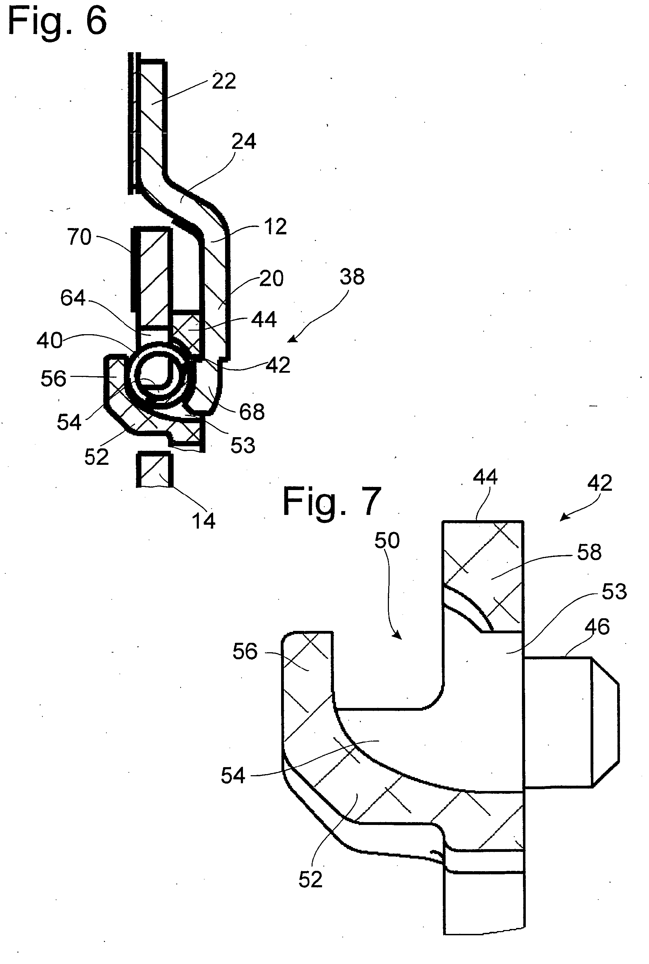

In Zuordnung zu jeder der Dämpferfedern 40 weist das Federhalterungselement 42 einen Federkanal 50 auf. Dieser ist im Wesentlichen in einer in Fig. 6 und Fig. 7 deutlich erkennbaren seitlichen Ausformung 52 gebildet, die bei einem aus Kunststoffmaterial hergestellten Federhalterungselement 42 mit dem ringartigen Körper 44 integral ausgebildet ist. In dem ringartigen Körper 44 ist in Zuordnung zu jedem Federkanal 50 eine Öffnung 53 vorgesehen, durch welche hindurch eine jeweilige Dämpferfeder 40 in den Federkanal 50 eingesetzt werden kann. In Umfangsrichtung ist jeder Kanal 50 jeweils durch ein Paar von ersten Umfangsabstützbereichen 54 begrenzt. Diese ersten Umfangsabstützbereiche 54 sind sowohl an der seitlichen Ausformung 52 als auch am ringartigen Körper 44 in seinem die Öffnungen 53 in Umfangsrichtung begrenzenden Bereich vorgesehen. Ferner ist in Zuordnung zu jedem Federkanal 50 an der seitlichen Ausformung 52 ein Axialsicherungbereich 56 vorgesehen. Dieser liegt im Wesentlichen der zugeordneten Öffnung 53 gegenüber und begrenzt den Federkanal 50 in einer ersten axialen Richtung. Eine in einen Federkanal 50 einzuführende Dämpferfeder 40 muss auf Grund der Relativumfangslage bzw. des Umfangsabstands der einen zugeordneten Federkanal 50 begrenzenden ersten

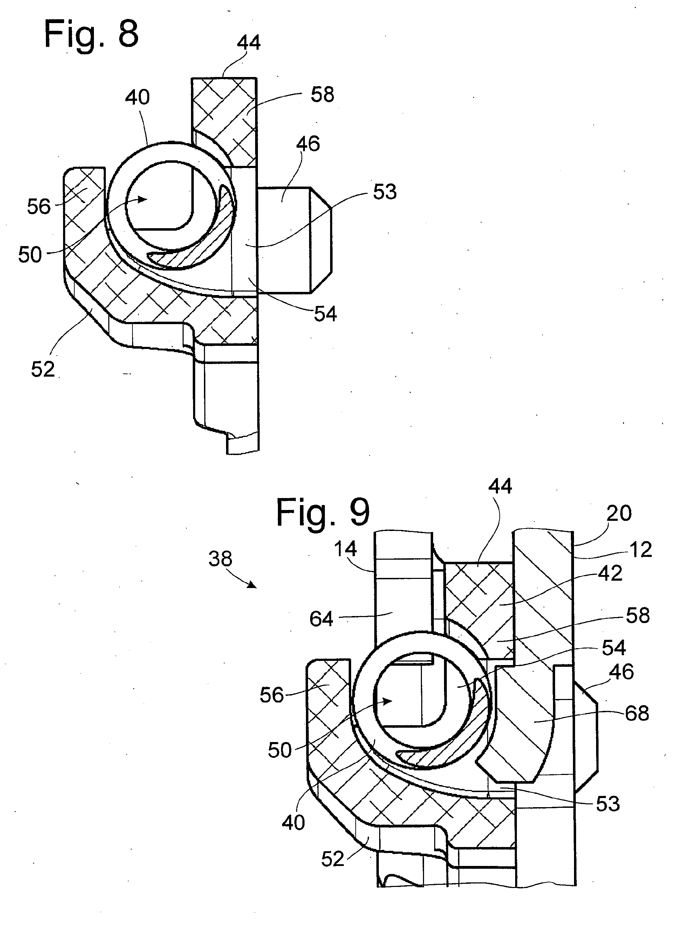

Umfangsabstützbereiche 54 zunächst komprimiert werden, so dass ihre Umfangserstreckung dem Umfangsabstand der ersten Umfangsabstützbereiche 54 und somit auch der Umfangslänge des Federkanals 50 entspricht oder geringfügig kleiner ist. Die Feder kann dann durch die Öffnung 53 in den Federkanal 50 eingeführt werden, so dass sie die in Fig. 8 erkennbare Positionierung einnimmt. Dabei überlappt die Dämpferfeder 40 nach radial außen hin auch den die Öffnung 53 nach radial außen begrenzenden Bereich des ringartigen Körpers 44, so dass nicht nur in der angesprochenen ersten axialen Richtung eine axiale Sicherung durch den Axialsicherungsbereich 56 vorgesehen ist, sondern auch in der zweiten axialen Richtung bereits eine gewisse Axialsicherung durch einen am ringartigen Körper 44 gebildeten zweiten Axialsicherungsbereich 58 realisiert ist. Ferner ist es denkbar, an den ersten Umfangsabstützbereichen 54 der kreisrunden Umfangskontur der Dämpferfeder 40 entsprechende Einsenkungen vorzusehen, in welche eine derartige Dämpferfeder 40 dann bei Entspannung einrasten kann, so dass auch dadurch ein Beitrag zur axialen Sicherung bzw. generell zur Halterung einer derartigen Dämpferfeder 40 im zugeordneten Federkanal 50 geleistet wird.

Um die Drehmomentabstützung bezüglich des inneren Scheibenelements 14 zu erlangen, weist dieses in Zuordnung zu jeder Dämpferfeder 40 bzw. in Zuordnung zu jeder seitlichen Ausformung 52 des Federhalterungselements 42 eine Öffnung 60 auf. Diese Öffnung 60 weist einen radial äußeren Abschnitt 62 mit geringerer Umfangserstreckung auf, der in Umfangsrichtung begrenzt ist durch zweite Umfangsabstützbereiche 64. Radial innen schließt an diesen Abschnitt 62 ein Abschnitt 66 mit größerer Umfangserstreckung an. Im zusammengefügten Zustand greift jeweils eine Ausformung 52 des Federhalterungselements 42 in den inneren Abschnitt 66 einer zugeordneten Öffnung 60 ein. Der entsprechende Axialsicherungsbereich 56 greift in den äußeren Abschnitt 62 ein. Die jeweiligen Umfangserstreckungslängen des äußeren Abschnitts 62 und des inneren Abschnitts 66 sind jedoch derart bemessen, dass ein direkter Umfangsabstützkontakt zwischen dem inneren Scheibenelement 14 und dem Federhalterungselement 42 nicht auftritt. Im zusammengefügten Zustand liegen die zweiten Umfangsabstützbereiche 64 axial unmittelbar neben den derselben Dämpferfeder 40 zugeordneten ersten Umfangsabstützbereichen 54. Die zweiten Umfangsabstützbereiche 64 liegen somit im Wesentlichen axial zwischen dem ringartigen Körper 44 und dem ersten Axialsicherungsbereich 56. Die Dämpferfedern 40 stützen sich somit auf Grund ihrer vorgespannten Einbauposition im nicht mit Drehmomenten belasteten Zustand sowohl an den ersten Umfangsabstützbereichen 54 als auch an den mit gleichem Umfangsabstand wie die ersten Umfangsabstützbereiche 54 zueinander angeordneten zweiten Umfangsabstützbereichen 64 ab.

In dem in Fig. 9 erkennbaren zusammengefügten Zustand greift weiterhin ein am radial inneren Endbereich des inneren Ringabschnitts 20 ausgebildeter und durch axiale Verformung bereitgestellter Axialsicherungsabschnitt 68 geringfügig in die zugeordnete Öffnung 53 des Federhalterungselements 42 ein. Die Umfangserstreckung eines derartigen Axialsicherungsabschnitts 68 entspricht im Wesentlichen dem Umfangsabstand der zugeordneten ersten Umfangsabstützbereiche 54, so dass durch diesen Axialsicherungsabschnitt 68 nicht nur eine weitergehende axiale Sicherung der zugeordneten Dämpferfeder 40 erlangt werden kann, sondern auch die drehfeste Ankopplung des Federhalterungselements 42 an das äußere Scheibenelement 12 unterstützt werden kann.

Der Explosionsdarstellung der Fig. 3 kann man weiter entnehmen, dass eine ringartig ausgestaltete Wellfeder 70 vorgesehen ist, die im Bereich mehrerer nach radial außen greifender Befestigungslaschen 72 am äußeren Ringabschnitt 22 des äußeren Scheibenelements 12 festgelegt ist. Die Wellfeder 70 liegt mit ihrem ringartigen Bereich neben dem radial äußeren Bereich des inneren Scheibenelements 14 und presst diesen gegen den inneren Ringabschnitt 20 des äußeren Scheibenelements 12, und zwar unter Zwischenlagerung des ringartigen Körpers 44 des Federhalterungselements 42. Somit ist einerseits eine definierte Axialrelativlage der beiden Scheibenelemente 12, 14 zueinander vorgegeben, und ist andererseits eine Reibeinrichtung bereitgestellt. Diese ist im Wesentlichen dadurch gebildet, dass die Wellfeder oder Vorspannfeder 70 bei Umfangsrelativdrehung der beiden Scheibenelemente 12, 14 bezüglich einander am inneren Scheibenelement 14 reibt, welches dann wiederum am ringartigen Körper 44 des Federhalterungselements 42 reibt.

Um hier eine zuverlässige Wechselwirkung sicherstellen zu können, ist die Wellfeder 70 derart ausgestaltet, dass an jedem Zahn 32 der Verzahnungsformation 30 am inneren Scheibenelement 14 eine zumindest bereichsweise auf diesen zu ausgeformte Welle vorhanden ist und somit jeder Zahn 32 der Verzahnungsformation 30 am inneren Scheibenelement 14 in Richtung auf das äußere Scheibenelement 12 zu gepresst wird.

Der bei der vorangehend beschriebenen Kupplungsscheibe 10 vorhandene Torsionsschwingungsdämpfer 38 hat im Wesentlichen die Funktion einer Vordämpfungsstufe, also einer Dämpfungsstufe, die bei geringen zu übertragenden Drehmomenten wirksam ist. In diesem Zustand auftretende Drehmomentschwankungen führen zu einer Relativdrehbewegung zwischen den beiden Scheibenelementen 12, 14, welche durch das in Fig. 1 erkennbare Bewegungsspiel 34 zwischen den beiden Verzahnungsformationen 26 und 30 ermöglicht ist. Diese Relativdrehbewegung erfolgt unter Kompression der Dämpferfedern 40, welche sich dann in einem ihrer Umfangsendbereiche an den ersten Umfangsabstützbereichen 54 und dem anderen Umfangsendbereich an den zweiten Umfangsabstützbereichen 64 abstützen. Somit können geringere Drehmomentschwankungen abgefangen werden und unter anderem auch durch die vorangehend beschriebenen sich dann reibend aneinander bewegenden Bauteile dissipiert werden.

Auf Grund der erfindungsgemäßen konstruktiven Ausgestaltung des Torsionsschwingungsdämpfers 38 bzw. der Kupplungsscheibe 10 mit den radial außerhalb der Dämpferfedern 40 bzw. des Federhalterungselements 42 liegenden Verzahnungsformationen 26, 30 wird die bei vollständiger Auslastung der Dämpferfedern 40 im Drehmomentübertragungszustand auftretende Flächenpressung zwischen den aneinander anliegenden Zähnen 28, 32 gemindert. Diese geringere Flächenpressung hat zur Folge, dass auch in diesem Zustand grundsätzlich Radialrelativbewegungen zwischen den beiden Scheibenelementen 12, 14 ohne übermäßige Reibeffekte erfolgen können und somit Achsversätze und ggf. auch Achsneigungen der beiden zur Drehmomentübertragung zu koppelnden Wellen ausgeglichen werden können. Es ist dann nicht unbedingt erforderlich, die beiden Scheibenelemente 12, 14 in den aneinander anliegenden Oberflächenbereichen der Verzahnungsformationen 26, 30 zu härten, beispielsweise induktiv zu härten. Weiterhin ist der Aufbau des erfindungsgemäßen Torsionsschwingungsdämpfers 38 sehr einfach. Das äußere Scheibenelement 12 erfüllt gleichzeitig auch die Funktion eines herkömmlichen Deckscheibenelements, in dem es einerseits die drehmomentübertragungsmäßige Abstützung der Dämpferfedern 40, nämlich über das Federhalterungselement 42, ermöglicht, und andererseits gleichzeitig auch zur Axialsicherung der Dämpferfedern 40 beiträgt. Die Axialsicherung der Dämpferfedern 40 in der anderen axialen Richtung wird, ohne dass ein weiteres Deckscheibenelement erforderlich wäre, durch den ersten Axialsicherungsbereich 56 am Federhalterungselement 42 realisiert.

Es sei darauf hingewiesen, dass selbstverständlich verschiedene Variationen bei dem vorangehend beschriebenen Aufbau möglich sind. So könnte beispielsweise das Federhalterungselement 42 nicht ringartig ausgebildet sein, also einen ringartigen Körper 44 aufweisen, sondern könnte in Zuordnung zu den einzelnen Dämpferfedern 40 segmentiert sein, so dass mehrere über den Umfang verteilt liegende und nicht notwendigerweise fest miteinander verbundene Federhalterungselemente vorhanden wären. Auch ist es selbstverständlich möglich, die Federkanäle 50 so zu gestalten, dass diese mehrere aufeinander folgende oder ineinander geschachtelte Dämpferfedern 40 aufnehmen können. Das Federhalterungselement 42 oder ggf. die Federhalterungselemente könnten auch mit dem inneren Scheibenelement 14 fest verbunden sein, um dann eine Abstützung der Federn 40 direkt am äußeren Scheibenelement 12 vorzusehen.

## Patentansprüche

1. Torsionsschwingungsdämpfer (38), insbesondere für eine Kupplungsscheibe (10), umfassend:
- ein - bezogen auf eine Drehachse (A) - radial äußeres Scheibenelement (12),
- ein radial inneres Scheibenelement (14),
- wenigstens ein Federhalterungselement (42) für wenigstens eine Dämpferfeder (40), wobei das Federhalterungselement (42) mit einem Scheibenelement (12) von äußerem Scheibenelement (12) und innerem Scheibenelement (14) zur gemeinsamen Drehbewegung fest verbunden ist und erste Umfangsabstützbereiche (54) für die wenigstens eine Dämpferfeder (40) bereitstellt, und
wobei an dem anderen Scheibenelement (14) von innerem Scheibenelement (14) und äußerem Scheibenelement (12) zweite Umfangsabstützbereiche (64) für die wenigstens eine Dämpferfeder (40) vorgesehen sind,
wobei das Federhalterungselement (42) für die wenigstens eine Dämpferfeder (40) einen in Umfangsrichtung durch die ersten Umfangsabstützbereiche (54) begrenzten Federkanal (50) aufweist,
**dadurch gekennzeichnet, dass** an dem wenigstens einen Federhalterungselement (42) ein erster Axialsicherungsbereich (56) vorgesehen ist, durch welchen die wenigstens eine Dämpferfeder (40) gegen Herausbewegung aus dem Federkanal (50) in einer ersten axialen Richtung gesichert ist.

2. Torsionsschwingungsdämpfer (38) nach Anspruch 1,
**dadurch gekennzeichnet, dass** ein zweiter Axialsicherungsbereich (68) vorgesehen ist, durch welchen die wenigstens eine Dämpferfeder (40) gegen Herausbewegung aus dem Federkanal (50) in einer zweiten axialen Richtung, die der ersten axialen Richtung entgegengesetzt ist, gesichert ist.

3. Torsionsschwingungsdämpfer (38) nach Anspruch 2,
**dadurch gekennzeichnet, dass** der zweite Axialsicherungsbereich (68) wenigstens zum Teil an dem einen Scheibenelement (12) vorgesehen ist.

4. Torsionsschwingungsdämpfer nach Anspruch 3,
**dadurch gekennzeichnet, dass** an dem einen Scheibenelement (12) ein zwischen die der wenigstens einen Dämpferfeder (40) zugeordneten ersten Umfangsabstützbereiche (54) eingreifender Axialsicherungsabschnitt (68) vorgesehen ist.

5. Torsionsschwingungsdämpfer (38) nach Anspruch 2, 3 oder 4,
**dadurch gekennzeichnet, dass** der zweite Axialsicherungsbereich (68) wenigstens zum Teil an dem wenigstens einen Federhalterungselement (42) vorgesehen ist.

6. Torsionsschwingungsdämpfer (38) nach einem der Ansprüche 1 bis 5,
**dadurch gekennzeichnet, dass** das wenigstens eine Federhalterungselement (42) aus Kunststoff aufgebaut ist.

7. Torsionsschwingungsdämpfer (38) nach einem der Ansprüche 1 bis 6,
**dadurch gekennzeichnet, dass** im Wesentlichen radial außerhalb des wenigstens einen Federhalterungselements (42) eine Drehwinkelbegrenzungsanordnung (36) vorgesehen ist.

8. Torsionsschwingungsdämpfer (38) nach Anspruch 7,
**dadurch gekennzeichnet, dass** die Drehwinkelbegrenzungsanordnung (36) an dem radial äußeren Scheibenelement (12) und dem radial inneren Scheibenelement (14) Verzahnungsformationen (26, 30) aufweist, die mit Drehbewegungsspiel (34) in Eingriff stehen.

9. Torsionsschwingungsdämpfer (38) nach einem der Ansprüche 1 bis 8,
**dadurch gekennzeichnet, dass** das radial äußere Scheibenelement (12) und das radial innere Scheibenelement (14) sich in Umfangsrichtung und in radialer Richtung wenigstens bereichsweise überlappen und dass eine die beiden Scheibenelemente (12, 14) gegeneinander vorspannende Vorspannanordnung (70) vorgesehen ist.

10. Torsionsschwingungsdämpfer (38) nach Anspruch 9,
**dadurch gekennzeichnet, dass** die Vorspannanordnung (70) ein bezüglich des einen Scheibenelements (12) sich abstützendes und das andere Scheibenelement (14) gegen dieses vorspannendes Vorspannfederelement (70) umfasst.

11. Torsionsschwingungsdämpfer (38) nach Anspruch 9 oder 10,
**dadurch gekennzeichnet, dass** die Scheibenelemente (12, 14) unter Zwischenlegung des wenigstens einen Federhalterungselements (42) gegeneinander vorgespannt sind.

12. Torsionsschwingungsdämpfer (38), insbesondere für eine Kupplungsscheibe, umfassend:
- ein - bezogen auf eine Drehachse (A) - radial äußeres Scheibenelement (12),
- ein radial inneres Scheibenelement (14),
- wenigstens ein Federhalterungselement (42) für wenigstens eine Dämpferfeder (40), wobei das Federhalterungselement (42) mit einem Scheibenelement (12) von äußerem Scheibenelement (12) und innerem Scheibenelement (14) zur gemeinsamen Drehbewegung fest verbunden ist und erste Umfangsabstützbereiche (54) für die wenigstens eine Dämpferfeder (40) bereitstellt, und
wobei an dem anderen Scheibenelement (14) von innerem Scheibenelement (14) und äußerem Scheibenelement (12) zweite Umfangsabstützbereiche (64) für die wenigstens eine Dämpferfeder (40) vorgesehen sind,
wobei das Federhalterungselement (42) für die wenigstens eine Dämpferfeder (40) einen in Umfangsrichtung durch die ersten Umfangsabstützbereiche (54) begrenzten Federkanal (50) aufweist,
**dadurch gekennzeichnet, dass** im Wesentlichen radial außerhalb des wenigstens einen Federhalterungselements (42) eine Drehwinkelbegrenzungsanordnung (36) vorgesehen ist.

13. Kupplungsscheibe (10), umfassend einen Torsionsschwingungsdämpfer (38) nach einem der vorangehenden Ansprüche.

14. Kupplungsscheibe (10) nach Anspruch 13,
**dadurch gekennzeichnet, dass** das innere Scheibenelement (14) eine Nabenanordnung (18) zur drehfesten Ankopplung an eine Welle aufweist, und dass das äußere Scheibenelement (12) Reibbeläge (16) trägt.
